# EUROPEAN PATENT APPLICATION

(11) **EP 1 469 672 A1**
(43) Date of publication of application: **20.10.2004**
(21) Application number: 04008996.3
(22) Date of filing: 15.04.2004
(51) Int. Cl.: H04N 5/225, H04N 7/14

(54) **Camera assembly of mobile communication device**

(30) Priority: 16.04.2003 KR 2003024066
(71) Applicant: LG Electronics Inc., Seoul (KR)
(72) Inventor: Yang, Kyung-Tae, Seoul (KR); Kim, Min-Soo, Gwangmyeong Gyeonggi-Do (KR)
(74) Representative: von Hellfeld, Axel, Dr. Dipl.-Phys.

(57) **Abstract**

Disclosed is a camera assembly of a mobile communication device comprising: a camera rotatably coupled to one side of the mobile communication device; a camera rotation portion for rotating the camera; and a control portion for controlling the camera rotation portion. The camera rotation portion includes: a housing; a geared motor mounted in the housing for generating a rotation force; and a decelerator for decelerating a rotation force generated from the geared motor and thereby rotating the camera.

## Description

### BACKGROUND OF THE INVENTION

### 1. Field of the Invention

The present invention relates to a camera assembly, and more particularly, to a camera assembly of a mobile communication device rotatably installed at a hinge portion of the mobile communication device.

### 2. Description of the Conventional Art

Generally, a mobile communication device not only transmits voice and data but also provides multi-media and internet functions. The mobile communication device can transmit or receive an image photographed by a camera.

The mobile communication device can be divided into a body mounted type, a folder mounted type, and a hinge mounted type according to a mounted position of a camera. Among these types, the hinge mounted type is much used since a rotary angle of a camera (photographic angle) can be widely obtained. Hereinafter, the hinge mounted type of the mobile communication device will be explained. The term of the mobile communication device includes a mobile telephone, a cellular telephone, a personal communication system (PCS), a personal data assistant (PDA), a laptop computer, and other device having a wireless communication function.

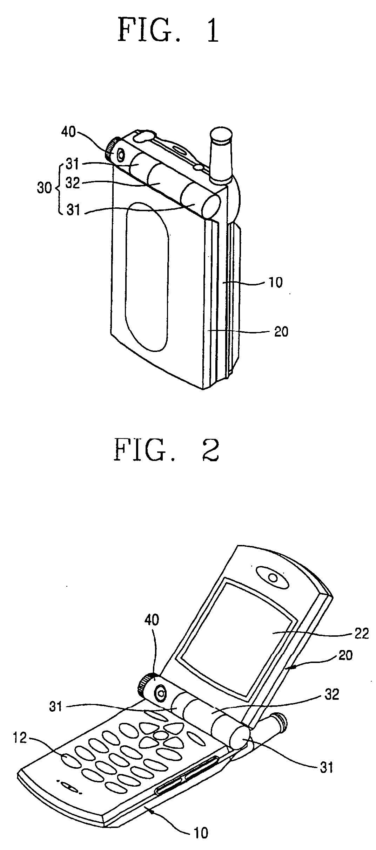

Figure 1 is a perspective view showing a state that a folder is closed in a mobile communication device in accordance with the conventional art, and Figure 2 is a perspective view showing a state that a folder is open in the conventional mobile communication device.

As shown, the conventional mobile communication device comprises: a body 10 provided with selection buttons 12; a folder 20 rotatably installed at the body 10 by a hinge 30; and a camera assembly 40 installed at the hinge 30.

The hinge 30 is composed of two body side hinge portions 31 extended from the body 10, and a folder side hinge portion 32 extended from the folder 20 and positioned between said two body side hinge portions 31.

The camera assembly 40 is rotatably inserted into the body side hinge portions 31.

In order to obtain a user's desired image, the camera assembly 40 has to be freely rotated with a certain angle.

In the mobile communication device, the user has to manually rotate the camera assembly 40 towards a desired direction at the time of adjusting a rotation angle of the camera assembly 40, thereby having a difficulty in using.

Accordingly as the mobile communication device becomes smaller, the camera assembly attached thereto also becomes smaller. Therefore, it is very difficult to manually adjust the rotation angle of the small camera assembly with holding and rotating the camera assembly by hands.

### SUMMARY OF THE INVENTION

Therefore, an object of the present invention is to provide a camera assembly of a mobile communication device capable of automatically and easily controlling a rotation angle of a camera.

To achieve these and other advantages and in accordance with the purpose of the present invention, as embodied and broadly described herein, there is provided a camera assembly of a mobile communication device comprising: a camera rotatably coupled to one side of the mobile communication device; a camera rotation portion for rotating the camera; and a control portion for controlling the camera rotation portion.

The camera is composed of: a camera case rotatably installed at a body side hinge portion of the mobile communication device; and a camera module accommodated in the camera case.

The camera rotation portion is composed of: a housing; a geared motor mounted in the housing for generating a rotation force; and a decelerator for decelerating a rotation force generated from the geared motor and thereby rotating the camera.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a perspective view showing a state that a folder is closed in a mobile communication device in accordance with the conventional art;
Figure 2 is a perspective view showing a state that a folder is open in the conventional mobile communication device;
Figure 3 is a perspective view showing a state that a folder is open in a mobile communication device according to the present invention;
Figure 4 is an enlarged view of Figure 3, and is a sectional view showing an example of a camera assembly of the mobile communication device according to the present invention;
Figure 5 is a perspective view showing a coupling among a camera, a camera rotation portion, and a power supply portion in one example of the camera assembly of the mobile communication device according to the present invention;
Figure 6 is a rear surface perspective view showing a camera installed at a body in one example of the camera assembly of the mobile communication device according to the present invention;
Figure 7 is an extracted view of main parts of Figure 4;
Figure 8 is a sectional view taken along line VIII-VIII of Figure 7;
Figure 9 is a longitudinal section view showing a camera rotation portion;
Figure 10 is a perspective view showing a decelerator of Figure 9;
Figure 11 is an enlargement view of "A" of Figure 3, and is a sectional view showing another example of the camera assembly of the mobile communication device according to the present invention;
Figure 12 is an extracted view of main parts of Figure 11;
Figure 13 is a perspective view showing a coupling among a camera, a camera rotation portion, and a power supply portion in another example of the camera assembly of the mobile communication device according to the present invention;
Figure 14 is a rear surface perspective view showing the camera rotation portion installed at a body in another example of the camera assembly of the mobile communication device according to the present invention;
Figure 15 is a perspective view showing another example of a decelerator in another example of the camera assembly of the mobile communication device according to the present invention;
Figure 16 is a rear surface perspective view showing the decelerator installed at the body in another example of the camera assembly of the mobile communication device according to the present invention; and
Figure 17 is a construction view for explaining inside of the decelerator in another example of the camera assembly of the mobile communication device according to the present invention.

### DETAILED DESCRIPTION OF THE PREFERRED EMBODIMENTS

Reference will now be made in detail to the preferred embodiments of the present invention, examples of which are illustrated in the accompanying drawings.

Hereinafter, a camera assembly of a mobile communication device according to the present invention will be explained with reference to the attached drawings.

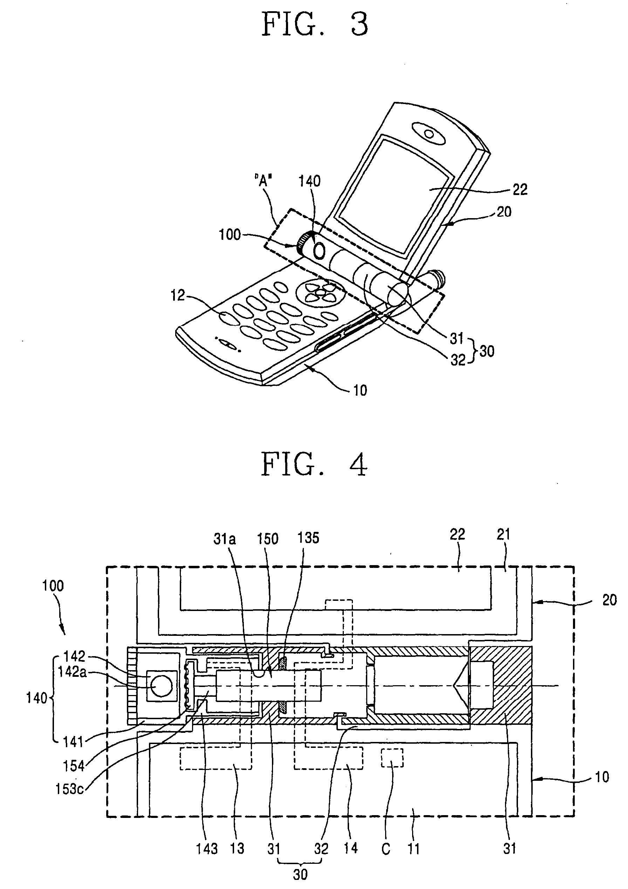

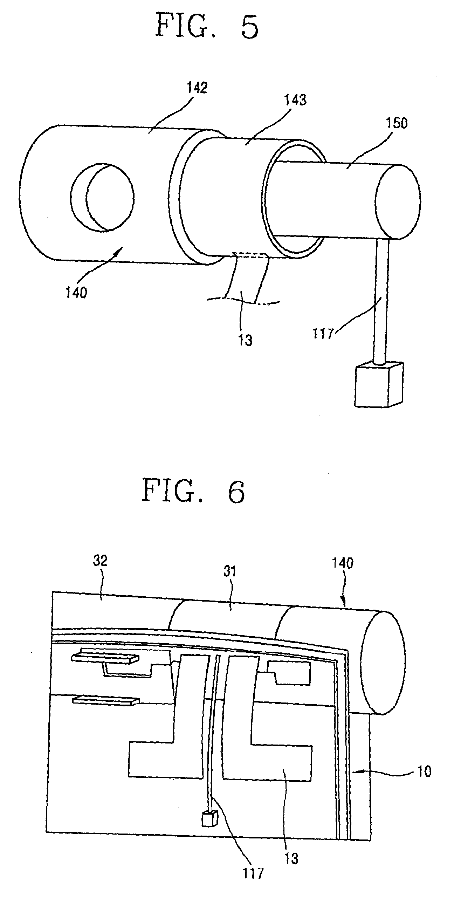

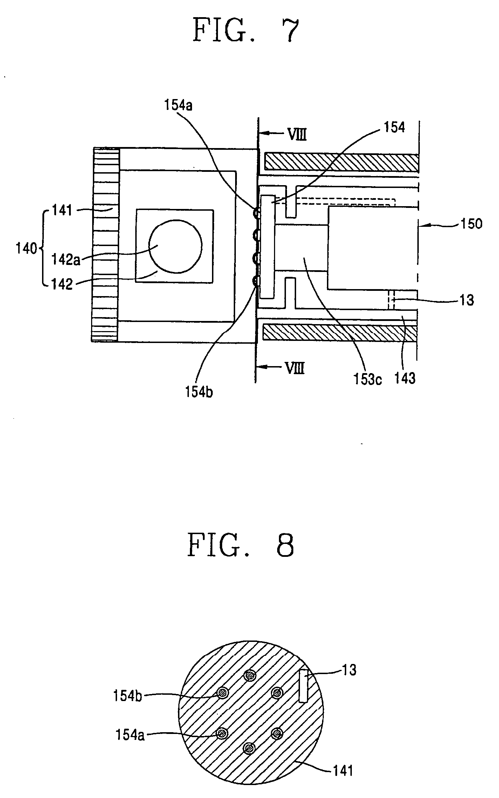

Figure 3 is a perspective view showing a state that a folder is open in a mobile communication device according to the present invention; Figure 4 is an enlarged view of Figure 3, and is a sectional view showing an example of a camera assembly of the mobile communication device according to the present invention; Figure 5 is a perspective view showing a coupling among a camera, a camera rotation portion, and a power supply portion in one example of the camera assembly of the mobile communication device according to the present invention; Figure 6 is a rear surface perspective view showing a camera installed at a body in one example of the camera assembly of the mobile communication device according to the present invention; Figure 7 is an extracted view of main parts of Figure 4; and Figure 8 is a sectional view taken along line VIII-VIII of Figure 7.

As shown in Figures 3 to 8, the mobile communication device comprises: a body 10; a folder 20 rotatably installed at the body 10 by a hinge 30; and a camera assembly 100 rotatably installed at the hinge 30.

The body 10 is composed of a main PCB 11 for storing and transmitting/receiving image information photographed by the camera assembly 100, and a plurality of buttons 12 installed near the main PCB 11.

The hinge 30 is composed of two body side hinge portions 31 extended from the body 10, and a folder side hinge portion 32 extended from the folder 20 and positioned between said two body side hinge portions 31.

The folder 20 includes: an LCD 22 for displaying image information which has been inputted through the camera 140; a sub PCB 21 installed at the LCD 22; and an FPCB for an LCD 14 for connecting the sub PCB 21 and the main PCB 11.

An FPCB for a camera 13 has one end connected to the main PCB 11 inside the body 10 and another end connected to a camera module 142 which will be later described.

When the camera assembly 100 is rotated, the FPCB for a camera 13 connected to the camera module 142 is pulled. Herein, the FPCB for a camera 13 is wound in the body side hinge portions 31 at least one time in order not to be cut.

The camera assembly 100 includes: a camera 140 rotatably installed at the hinge 30 automatically or manually; a camera rotation portion 150 installed at a lateral surface of the camera 140 for rotating the camera 140; and a control portion C for controlling the camera rotation portion 150.

The camera 140 is composed of a cylindrical camera case 141 rotatably installed at one side of the body side hinge portion 31, and a camera module 142 accommodated in the camera case 141 and having a lens 142a for photographing a subject.

At a side surface of the camera 140, formed is an FPCB accommodation portion 143 inserted into the body side hinge portions 31 and in which the FPCB for a camera 13 is wound.

The camera rotation portion 150 is inserted into a hinge groove 31a formed in the middle of the body side hinge portions 31 and fixed by a fixation ring 135. The camera rotation portion 150 is provided with a lead wire 117 drawn to outside and serving as a power supply portion.

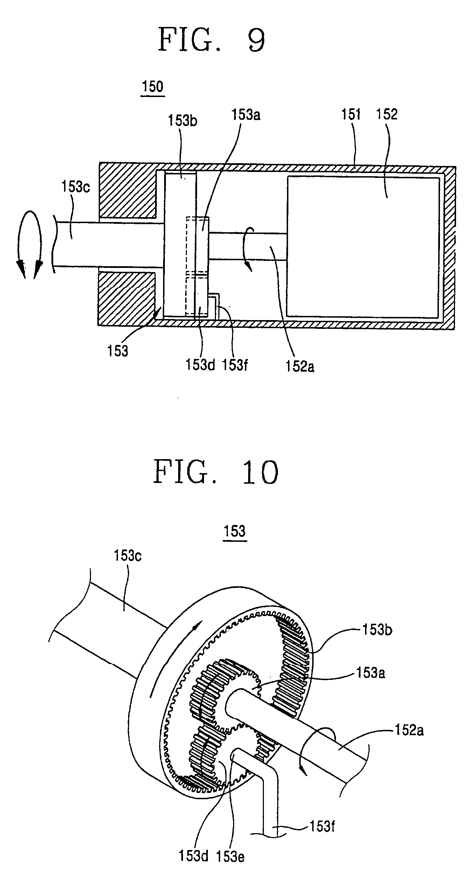

Figure 9 is a longitudinal section view showing a camera rotation portion, and Figure 10 is a perspective view showing a decelerator of Figure 9.

As shown, the camera rotation portion 150 includes: a housing 151; a geared motor 152 installed in the housing 151 for generating a rotational force according to an electric control signal of the control portion C (Refer to Figure 4); and a decelerator 153 coaxially disposed with the geared motor 152 for decelerating a rotational force generated from the geared motor 152 and thereby rotating the camera 140 (Refer to Figure 4).

The decelerator 153 includes: a driving gear 153a provided at a geared motor axis 152a for decelerating a rotational force generated from the geared motor 152 and thereby transmitting to the camera 140; a deceleration gear 153b contacting the driving gear 153a and deceleration-rotated with a certain ratio; a deceleration rotational axis 153c for transmitting a rotational force which has been decelerated by the deceleration gear 153b to the camera 140; and a transmission gear 153d disposed between the driving gear 153a and the deceleration gear 153b for transmitting a power.

The transmission gear 153d is supported by a bracket 153f, and is rotated on the basis of a rotation axis 153e. Therefore, the rotational force generated from the geared motor 152 passes through the driving gear 153a, the transmission gear 153d, and the deceleration gear 153b sequentially thus to be outputted through the deceleration rotational axis 153c.

A frictional plate 154 having a plurality of stepping protrusions 154a is formed at the end of the deceleration rotational axis 153c, and a plurality of stepping grooves 154b corresponding to the stepping protrusions 154a are formed at the camera case 141 of the camera 140. The stepping protrusions 154a and the stepping grooves 154b are formed as a hemispherical shape.

At the time of automatically controlling a rotation angle of the camera 140, the deceleration rotational axis 153c of the camera rotation portion 150 rotates the camera 140 since the stepping protrusions 154a are in a state of being fitted into the stepping grooves 154b.

On the contrary, at the time of manually controlling a rotation angle of the camera 140, the camera 140 is rotated towards a desired direction by the user under a state that a power of the geared motor 152 of the camera rotation portion 150 becomes OFF. According to this, the stepping protrusions 154a become consecutively fitted into the adjacent stepping grooves 154b thus to generate a frictional force. At this time, the deceleration rotational axis 153c is elastically retreated backwardly. If the camera 140 is stopped after being rotated with a certain angle, the stepping protrusions 154a maintain the state of being fitted into the stepping grooves 154b thus to maintain a rotation angle of the camera 140 as the user's desired angle.

Operation of the camera assembly in the mobile communication device according to the present invention will be explained with reference to Figures 3 to 10 as follows.

In case of automatically controlling a rotation angle of the camera 140, the buttons 12 installed at the body 10 are pressed thus to supply a power to the geared motor 152 through the lead wire 117, and at this time, the geared motor axis 152a is rotated.

The rotational force of the geared motor 152 passes through the driving gear 153a of the decelerator 153, the transmission gear 153d, and the deceleration gear 153b through the geared motor axis 152a, and then is transmitted to the deceleration rotational axis 153c with a decelerated state as a certain ratio.

The deceleration rotational axis 153c of the camera rotation portion 150 is rotated by the frictional plate 154, the stepping protrusions 154a, and the stepping grooves 154b, thereby automatically controlling a rotation angle of the camera 140.

In case of manually controlling a rotation angle of the camera 140, the camera 140 is rotated towards a desired direction by the user under a state that a power of the geared motor 152 of the camera rotation portion 150 becomes OFF. According to this, the stepping protrusions 154a are consecutively detached/fitted from/into the adjacent stepping grooves 154b. At this time, since the geared motor 152 maintains a power-OFF state, the deceleration rotational axis 153c and the frictional plate 154 are stopped without a rotation.

When the stepping protrusions 154a are consecutively detached/fitted from/into the adjacent stepping grooves 154b, a frictional force is generated and the sound of click is heard. At this time, the user can feel that the camera 140 is rotated step by step by touch. If the user releases the rotating camera 140, the stepping protrusions 154a maintain the state of being fitted into the stepping grooves 154b and the rotation angle of the camera 140 is constantly maintained without being arbitrarily changed.

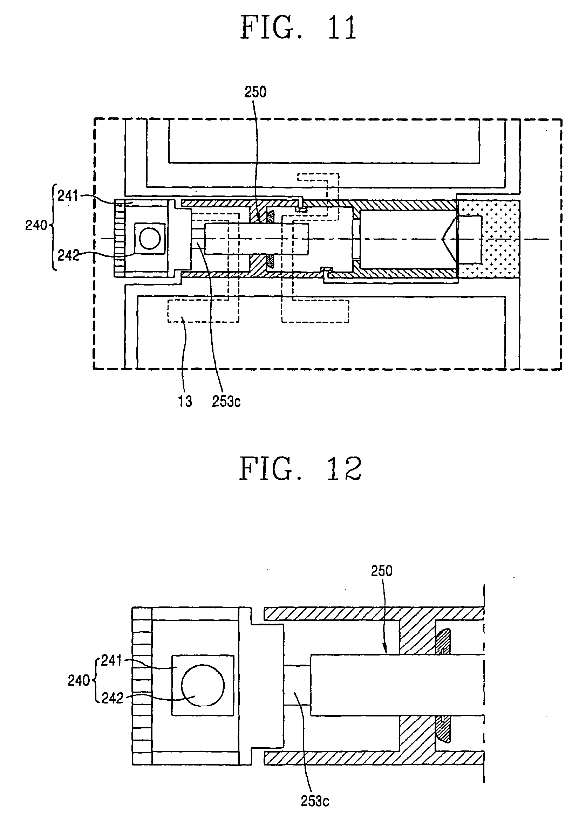

Figure 11 is an enlargement view of "A" of Figure 3, and is a sectional view showing another example of the camera assembly of the mobile communication device according to the present invention, and Figure 12 is an extracted view of main parts of Figure 11.

As shown, according to another example of the camera assembly of the mobile communication device of the present invention, the FPCB accommodation portion 143 (Refer to Figure 4) is not additionally formed at the camera case 241 of the camera 240, but the FPCB for a camera 13 is directly connected to the camera module 242.

The deceleration rotational axis 253c of the camera rotation portion 250 is fixed to the camera 240. A decelerator (not shown) inside the camera rotation portion 250 is constructed to have a deceleration ratio which is very low as approximately 125: 1.

In case of automatically controlling a rotation angle of the camera 240, the deceleration rotational axis 253c of the camera rotation portion 250 rotates the camera 240 with a certain angle since the deceleration rotational axis 253c of the camera rotation portion 250 is fixed to the camera 240.

In case of manually controlling a rotation angle of the camera 240, the camera 240 is rotated towards a desired direction by the user. Herein, since the decelerator inside the camera rotation portion 250 has a very low deceleration ratio, the deceleration rotational axis 253c is rotated with a certain angle with the camera 240 at the time of rotating the camera 240 towards a desired direction, thereby controlling a rotation angle of the camera 240.

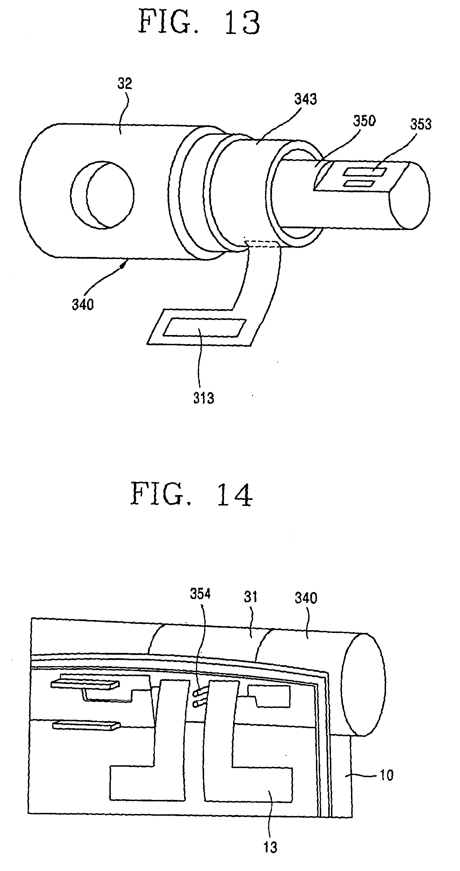

Figure 13 is a perspective view showing a coupling among a camera, a camera rotation portion, and a power supply portion in another example of the camera assembly of the mobile communication device according to the present invention, and Figure 14 is a rear surface perspective view showing the camera rotation portion installed at a body in another example of the camera assembly of the mobile communication device according to the present invention.

As shown, in another example of the camera assembly of the mobile communication device according to the present invention, a first connection terminal 353 serving as a power supply portion is installed at the camera rotation portion 350, and corresponding to this, a second connection terminal 354 is installed at the body side hinge portions 31. The unexplained reference numeral 13 denotes a flexible printed circuit board (FPCB), 340 denotes a camera, and 343 denotes an FPCB accommodation portion.

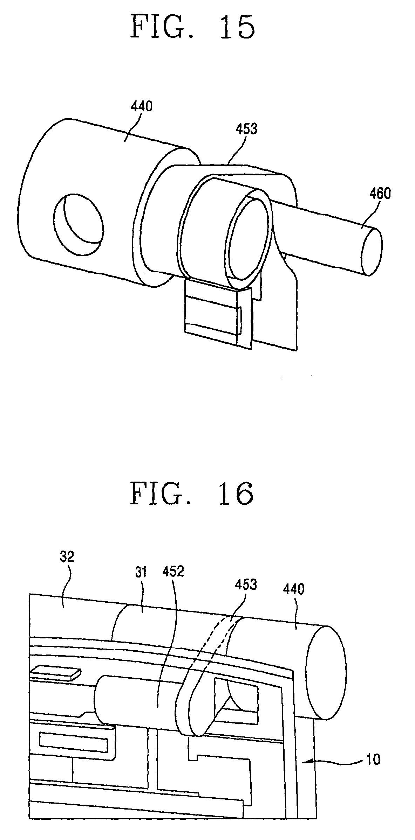

When the camera and the geared motor are coaxially arranged, the camera 340 and the geared motor 152 are positioned in serial. Therefore, a volume of the mobile communication device is obliged to become great. In order to correspond to a miniaturization trend of the mobile communication device, the geared motor is not arranged coaxially with the camera but is preferably arranged at the rear side (battery side) of the mobile communication device, which will be explained with reference to Figures 15 to 17.

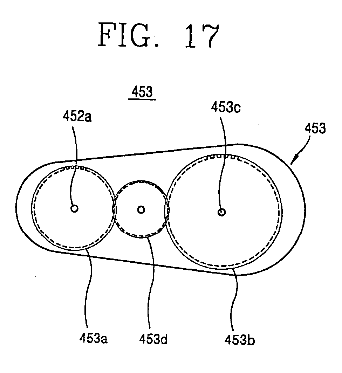

Figure 15 is a perspective view showing another example of a decelerator in another example of the camera assembly of the mobile communication device according to the present invention; Figure 16 is a rear surface perspective view showing the decelerator installed at the body in another example of the camera assembly of the mobile communication device according to the present invention; and Figure 17 is a construction view for explaining inside of the decelerator in another example of the camera assembly of the mobile communication device according to the present invention.

As shown, in another example of the camera assembly of the mobile communication device according to the present invention, the camera 440 is positioned at the side of the hinge 31, the geared motor 452 is positioned at the rear side (battery side) of the body 10, and the decelerator 453 is installed between the camera 440 and the geared motor 452.

The decelerator 453 includes: a driving gear 453a provided at one end of a driving motor axis 452a for decelerating a rotational force generated from the driving motor 452 and thereby transmitting to the camera 440; a deceleration gear 453b indirectly contacting the driving gear 453a; a deceleration rotational axis 453c for deceleration-rotating the camera 440 by using a rotational force which has been decelerated by the deceleration gear 453b; and a transmission gear 453d disposed between the driving gear 453a and the deceleration gear 453b for transmitting a power of the geared motor 452.

As aforementioned, according to the present invention, the rotation angle of the camera can be automatically or manually controlled easily by the user's selection.

Also, the camera can be assembled to the mobile communication device more firmly by using the FPCB accommodation portion formed at the side surface of the camera, and the FPCB can be prevented from being damaged by accommodating the FPCB in the FPCB accommodation portion.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A camera assembly of a mobile communication device comprising:
a camera rotatably coupled to one side of the mobile communication device;
a camera rotation portion for rotating the camera; and
a control portion for controlling the camera rotation portion.

2. The camera assembly of claim 1, wherein the camera includes:
a camera case rotatably installed at a body side hinge portion of the mobile communication device; and
a camera module accommodated in the camera case.

3. The camera assembly of claim 2, wherein an FPCB accommodation portion is formed at one side of the camera case.

4. The camera assembly of claim 1, wherein the camera rotation portion includes:
a housing;
a geared motor mounted in the housing for generating a rotation force; and
a decelerator for decelerating a rotation force generated from the geared motor and thereby rotating the camera.

5. The camera assembly of claim 4, wherein the geared motor and the decelerator are coaxially arranged.

6. The camera assembly of claim 4, wherein the camera rotation portion is inserted into a hinge groove formed inside the body side hinge portions of the mobile communication device and is fixed by a fixation ring.

7. The camera assembly of claim 4, wherein the decelerator includes:
a driving gear provided at a geared motor axis for decelerating a rotational force generated from the geared motor and thereby transmitting to the camera;
a deceleration gear contacting the driving gear and deceleration-rotated with a certain ratio;
a deceleration rotational axis for transmitting a rotational force which has been decelerated by the deceleration gear to the camera; and
a transmission gear disposed between the driving gear and the deceleration gear for transmitting a power.

8. The camera assembly of claim 4, wherein the geared motor is provided with a lead wire drawn to outside.

9. The camera assembly of claim 4, wherein a first connection terminal is installed at the geared motor, and a second connection terminal is installed at the body side hinge portions in correspondence to the first connection terminal.

10. The camera assembly of claim 8, wherein a frictional plate is formed at the deceleration rotational axis.

11. The camera assembly of claim 10, wherein the frictional plate is provided with stepping protrusions, and the camera is provided with stepping grooves that correspond to the stepping protrusions.

12. The camera assembly of claim 11, wherein the stepping protrusions and the stepping grooves are formed as a circular arc shape.

13. A camera assembly of a mobile communication device comprising:
a camera rotatably coupled to one side of a mobile communication device;
a camera rotation portion constituted with a geared motor disposed to be parallel with the camera for rotating the camera, and a decelerator for decelerating a rotational force generated from the geared motor and rotating the camera; and
a control portion for controlling the camera rotation portion.

14. The camera assembly of claim 13, wherein an FPCB accommodation portion is formed at one side of the camera.

15. The camera assembly of claim 13, wherein the camera rotation portion is inserted into a hinge groove formed inside body side hinge portions of the mobile communication device and is fixed by a fixation ring.

16. The camera assembly of claim 13, wherein the decelerator includes:
a driving gear provided at a geared motor axis for decelerating a rotational force generated from the geared motor and thereby transmitting to the camera;
a deceleration gear indirectly contacting the driving gear and deceleration-rotated with a certain ratio;
a deceleration rotational axis for transmitting a rotational force which has been decelerated by the deceleration gear to the camera; and
a transmission gear disposed between the driving gear and the deceleration gear for transmitting a power of the geared motor.

17. The camera assembly of claim 13, wherein the geared motor is provided with a lead wire drawn to outside.

18. The camera assembly of claim 13, wherein a first connection terminal is installed at the geared motor, and a second connection terminal is installed at the body side hinge portions in correspondence to the first connection terminal.

19. The camera assembly of claim 16, wherein the camera is directly connected to the deceleration rotational axis.
